# EUROPÄISCHE PATENTSCHRIFT

(11) **EP 3 271 253 B1**
(45) Veröffentlichungstag und Bekanntmachung des Hinweises auf die Patenterteilung: **24.04.2019**
(21) Anmeldenummer: 16708392.2
(22) Anmeldetag: 03.03.2016
(51) Int. Cl.: B65B 21/18, B65B 35/16, B65B 21/12, B65G 47/90

(54) **GREIFTULPE UND VERFAHREN ZUM KOPFSEITIGEN ERGREIFEN VON ARTIKELN**
GRIPPING BELL AND METHOD FOR GRASPING THE TOP OF ARTICLES
TULIPE DE PRÉHENSION ET PROCÉDÉ POUR LA SAISIE D'ARTICLES PAR LA TÊTE

(30) Priorität: 17.03.2015 DE 202015101356 U
(43) Veröffentlichungstag der Anmeldung: 24.01.2018
(73) Patentinhaber: Krones Aktiengesellschaft, 93073 Neutraubling (DE)
(72) Erfinder: KIRSCHNER, Peter, 93073 Neutraubling (DE); OSTERHAMMER, Florian, 93073 Neutraubling (DE)
(74) Vertreter: Benninger, Johannes
(86) Internationale Anmeldenummer: PCT/EP2016/054567
(87) Internationale Veröffentlichungsnummer: WO 2016/146399

(56) Entgegenhaltungen:
- EP-A1- 1 243 531
- DE-A1-102012 101 554
- DE-U- 6 923 534
- US-A- 3 863 753

## Beschreibung

Die vorliegende Erfindung betrifft eine Greiftulpe zum kopfseitigen Ergreifen von Artikeln, wie beispielsweise Behältern, insbesondere durch Korken, Kron-, Schraub- oder Bügelverschluss verschließbare Flaschen, gemäß dem Oberbegriff des Anspruchs 1, sowie ein Verfahren zum kopfseitigen Ergreifen solcher Artikel gemäß dem Oberbegriff des Anspruchs 11.

Vor allem in der Getränkeindustrie, aber auch in anderen Bereichen der Lebensmittelindustrie und/oder der Verpackungsindustrie werden so genannte Pack- oder Greiftulpen zum Umgang mit Artikeln, wie etwa Behältern, insbesondere Flaschen eingesetzt. Der Umgang kann beispielsweise vorsehen, Artikel, wie beispielsweise Behälter, insbesondere Flaschen, von einem Ort zu einem anderen Ort zu versetzen und/oder in eine Umverpackung, etwa eine Kartonage und/oder einen Getränkekasten einzusetzen.

Ein Artikel weist eine als Aufstandsfläche des Artikels dienende Grundfläche, eine um die sich normal zur Grundfläche erstreckende Höhe des Artikels von der Grundfläche beabstandete Deckfläche, sowie eine den Umfang der Grundfläche mit dem Umfang der Deckfläche verbindende Mantelfläche auf. Bei beispielsweise als Getränkebehälter ausgeführten Artikeln kann eine beispielsweise durch einen Deckel verschließbare Behälteröffnung in der Deckfläche vorgesehen sein. Die Behälteröffnung kann die Deckfläche vollständig einnehmen.

Bei Flaschen, wie beispielsweise Getränkeflaschen, nimmt die Behälteröffnung üblicherweise zumindest einen Teil der gegenüber der Grundfläche angeordneten Deckfläche ein. Sie weisen darüber hinaus kopfseitig zur Deckfläche hin häufig eine als Flaschenhals bezeichnete, meist konische Verjüngung auf, an deren Ende ein mit einem Deckel zusammenwirkender Abschluss vorgesehen sein kann. Deckel und Abschluss bilden dabei zusammenwirkende Teile eines Verschlusses. Im Falle eines Kronkorkens als Deckel kann der Abschluss eine Aufwölbung umfassen, im Falle eines Schraubverschlusses ein Außengewinde, um - ohne Anspruch auf Vollständigkeit - nur einige mögliche Ausgestaltungen von Verschlüssen anzudeuten.

Um Artikel mittels Greiftulpen zu versetzen und/oder in eine Umverpackung einzusetzen, wird eine Greiftulpe beim kopfseitigen Ergreifen von oben her kommend auf einen Artikel abgesenkt, bis die Greiftulpe mit ihren Greifmitteln zumindest einen als Kontaktabschnitt vorgesehenen oberen Teil der Mantelfläche des Artikels wenigstens teilweise umgibt. Durch eine Betätigung der Greiftulpe gelangen deren Greifmittel in form- und/oder reibschlüssigen Kontakt mit dem Artikel, der so genannten Halteposition, so dass bei einem Anheben der Greiftulpe der Artikel gehalten und mit angehoben wird. Durch erneute Betätigung oder durch Beenden der Betätigung wird der form- und/oder reibschlüssigen Kontakt wieder aufgehoben, so dass ein von einer Greiftulpe ergriffener Artikel an seinem Bestimmungsort wieder freigegeben wird.

Dabei können mehrere Greiftulpen gruppiert sein, um mehrere Artikel gleichzeitig zu versetzen, beispielsweise, um mit nur einer einzigen räumlichen Bewegung der ganzen Gruppe von Greiftulpen alle Flaschen gleichzeitig in einen Getränkekasten einzusetzen.

Durch DE 20 2005 011 971 U1 ist eine Greiftulpe zum kopfseitigen Ergreifen von insbesondere durch Korken, Kron-, Schraub- oder Bügelverschluss verschließbaren Flaschen bekannt, die in einem topfförmigen Gehäuse einen hülsenförmigen, mit seinem vorderen Ende am Topfrand des Gehäuses abgestützten, elastischen formbaren Einsatz und einen auf den Einsatz an dessen rückseitigem Ende mit einer axialen Druckkraft einwirkenden Stellkolben aufweist. Das Gehäuse ist im vorderen Bereich von einer radial nach außen elastisch verformbaren Wand gebildet. Zum Halten einer Flasche während deren Versetzens muss hierbei permanent eine Druckkraft ausgeübt werden, einhergehend mit einem nachteilig hohen Energieverbrauch.

Durch CN 202107099 U ist eine Greiftulpe bekannt, deren Greifmittel zwei einander gegenüberliegend angeordnete, zweiseitige Hebel umfassen. Jeder der beiden zweiseitigen Hebel ist um eine von zwei parallel verlaufenden Horizontalachsen verschwenkbar. Ein unterer, zum Erfassen eines Artikels vorgesehener Hebelarm jedes zweiseitigen Hebels ist als Greifbacke ausgebildet. Ein oberer, zur Einwirkung eines vermittels einer Betätigungseinrichtung auf und ab beweglichen Keils vorgesehener Hebelarm jedes zweiseitigen Hebels ist derart federbelastet, dass die Federbelastung eine Auseinanderbewegung der Greifbacken bewirkt. Durch Einführen des vermittels der Betätigungseinrichtung auf und ab beweglichen Keils zwischen die oberen Teile der beiden zweiseitigen Hebel bewegen sich die Greifbacken zangenartig aufeinander zu, um einen Artikel kopfseitig zu ergreifen und schließlich die Halteposition zu erreichen. Ein Zurückziehen des Keils bewirkt ein Öffnen der Greifbacken und damit ein Loslassen eines ergriffenen Artikels. Durch die Keilwirkung kann der Energieverbrauch beim Halten gesenkt werden. Nachteilig an dieser Art Greiftulpe ist jedoch deren großer Bauraumbedarf, bedingt durch die Schwenkbewegungen der um die Horizontalachsen schwenkbaren zweiseitigen Hebel. Dies wirkt sich besonders nachteilig aus, wenn mehrere aufrecht stehende Flaschen zu einer geordneten Gruppe zusammengestellt sind und diese Flaschen gleichzeitig von einer Gruppe entsprechend geordneter Greiftulpen erfasst werden sollen. Solange die zu erfassenden Flaschen im auch als Kopfbereich bezeichneten, von einer Greiftulpe zu erfassenden oberen Teil einschließlich ihres Verschlusses einen Durchmesser haben, der nicht unwesentlich kleiner als der Außendurchmesser der Grundfläche der Flasche ist, ist ein problemloses Überstülpen der Greiftulpen noch möglich. Sofern aber die Flaschenköpfe mit ihren Verschlüssen etwa den Durchmesser der Grundfläche haben oder sogar größer sind, dann lassen sich diese nicht mehr von einer solchen Gruppe von Greiftulpen erfassen, weil dann die in ihrem Bauraumbedarf zum Öffnen und Schließen ihrer Greifbacken größeren Greiftulpen sich gegenseitig behindern und nicht mehr zentrisch zu den mit ihren Mantelflächen aneinanderstoßenden Flaschen ausgerichtet werden können. Der Abstand der Achsen der mit ihren Mantelflächen aneinanderstoßenden benachbarten Flaschen ist dann nämlich kleiner als der kleinstmögliche Abstand der Achsen einander behindernder, benachbarter Greiftulpen.

Durch DE 10 2011 051 926 A1 ist eine Greiftulpe bekannt, die sich zum Erreichen einer Halteposition ihrer als Greifbacken ausgeführten Greifmittel ebenfalls einer Keilwirkung bedient. Indem der Keil mit einem nachfolgenden Abschnitt zusammenwirkt, der zwischen zwei mechanisch stabilen Zuständen gewechselt werden kann, sind jeweils betätigungskraftfreie Haltepositionen ermöglicht. Durch den sich an den Keil anschließenden, geraden Abschnitt mit parallelen, gegenüberliegenden Seiten weist diese Greiftulpe eine kraftfrei einzuhaltende Halteposition auf.

Weiterhin nicht zufriedenstellend ist hierbei jedoch der Energieverbrauch bis zum Erreichen der Halteposition.

Durch DE 10 2012 101 554 A1 ist eine Greiftulpe bekannt, deren Greifmittel wenigstens drei den Kontaktabschnitt eines Artikels allseitig in etwa gleicher Höhe umgreifende Greifzungen umfassen. Jede der Greifzungen ist schwenkbar und/oder elastisch an einem Halterahmen der Greiftulpe aufgehängt und stützt sich dort ab. An ihren dem Halterahmen abgewandten Stirnflächen weisen die Greifzungen jeweils nach innen zum Kontaktabschnitt hin aufeinander zu. Die Greifzungen werden durch kopfseitiges Absenken der Greiftulpe parallel zur sich normal zur Grundfläche erstreckenden Höhe eines Artikels über einen Halsabschnitt des Artikels gegen elastische Rückstellkräfte schräg nach oben auseinander gedrückt und jeweils in eine Winkellage zum Halterahmen gebracht, wobei sich die Stirnflächen der Greifzungen form- und/oder kraftschlüssig gegen den Kontaktabschnitt des Artikels abstützen. Um einen ergriffenen Artikel freizugeben, müssen die Greifzungen nach oben, entgegen deren Rückstellkräfte und entgegen der Schwerkraft des ergriffenen Artikels noch weiter aufgedrückt werden, was einen nach wie vor unerwünscht hohen Energieverbrauch zum Freigeben des Artikels aus der Halteposition nach sich zieht.

Durch DE 69 23 534 U ist ein mechanischer Flaschengreifer bekannt. Der Flaschengreifer bzw. die Tulpe ist an ein Rohr befestigt und besitzt eine äußere Hülse, die an ihrem unteren Ende ein Gewinde aufweist, in welches ein hohlzylinderähnliches Teil eingeschraubt werden kann. Die obere Stirnfläche ist mit Nasen und Einschnitten ausgestattet, sodass eine Magnetspule zusammen mit einem ringförmigen dünnen Blech formschlüssig darin eingebettet und gegen einen Anschlag der Hülse gepresst werden kann. Eine zu verbringende Flasche wird durch um einen kreisförmigen, zwischen zwei seitliche Teile eingeklemmten Draht schwenk- oder kippbare Riegelstücke gehalten. Es ist zudem möglich, das in eines der seitlichen Teile mit der Magnetspule eingelassene ringförmige Blech als Halterung für den Draht auszubilden. Ein in einem seitlichen Teil ausgearbeiteter Anschlag verhindert ein Kippen der Riegelstücke zur Mitte hin. Um den Drahtring drehbare Riegelstücke werden beim Einführen der Flasche in die Tulpe etwas angehoben, fallen nach der Einführung der Flasche unter den Halswulst der Flasche, maximal bis zum Anschlag in einem der seitlichen Teile und klemmen dann bei Anheben der Tulpe die Flasche fest. Sobald die Flasche wieder abgesetzt wird und die Klemmteile entlastet sind, werden diese durch Erregung des Magneten angezogen und fallen nach Anheben der Packtulpe und Entregen des Magneten zurück.

Nachhaltig scheint einem hohen Energieverbrauch beim Halten nur durch ein formschlüssiges Untergreifen und/oder durch ein selbstsperrendes, kraftschlüssiges Klemmen von Artikeln abgeholfen werden zu können. Damit ein formschlüssiges Untergreifen nicht unterseitig der Grundfläche geschehen muss, ist bekannt, in einem von den Greifmitteln einer Greiftulpe erreichbaren, vorzugsweise einen oberen Teil der Mantelfläche eines Artikels einnehmenden Kontaktabschnitt eine parallel zur Grundfläche radial abstehende Fläche vorzusehen, welche von den Greifmitteln der Greiftulpe um- und/oder untergriffen werden kann. Insbesondere bei PET-Flaschen (PET: Polyethylenterephthalat) ist unterhalb des Abschlusses häufig eine radial vom Flaschenhals abstehende, als Trag- oder Neckring bezeichnete Fläche angeformt.

Eine Aufgabe der Erfindung ist, eine Greiftulpe mit einem durchweg geringen Energieverbrauch zum Ergreifen, Halten und wieder Freigeben eines Artikels zu entwickeln. Ebenfalls eine Aufgabe der Erfindung ist, ein Verfahren mit einem durchweg geringen Energieverbrauch zum Ergreifen, Halten und wieder Freigeben eines Artikels zu entwickeln.

Die obige Aufgabe wird jeweils gelöst durch die Merkmale der unabhängigen Ansprüche. Weitere vorteilhafte Ausgestaltungen werden durch die Unteransprüche beschrieben.

Vorteile gegenüber dem Stand der Technik ergeben sich zusätzlich zu einer vollständigen Lösung der gestellten Aufgabe durch einen kleinstmöglichen Energieverbrauch dadurch, dass sowohl die Greiftulpe, als auch das Verfahren grundsätzlich geeignet sind, einen Artikel sowohl formschlüssig unterhalb einer als Trag- oder Neckring bezeichneten, in einem von den Greifmitteln der Greiftulpe erreichbaren, vorzugsweise einen oberen Teil der Mantelfläche eines Artikels einnehmenden vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Greiftulpe ausgestaltet sein kann und stellen keine abschließende Begrenzung dar. Es zeigen in schematischer Darstellung:
- Fig. 1: eine erste Sequenz eines kopfseitigen Ergreifens eines Artikels mittels einer Greiftulpe gemäß eines ersten Ausführungsbeispiels in teilweise geschnittener Seitenansicht, wobei Fig. 1 a) eine aufnahmebereite Greiftulpe vor dem kopfseitigen Absenken auf einen Artikel zeigt und Fig. 1 b) die Greiftulpe nach dem kopfseitigen Absenken auf den Artikel.
- Fig. 2: eine auf die in Fig. 1 b) folgende Sequenz des kopfseitigen Ergreifens eines Artikels mittels der Greiftulpe aus Fig. 1 in teilweise geschnittener Seitenansicht, wobei Fig. 2 a) die Greiftulpe unmittelbar nach dem kopfseitigen Absenken auf einen Artikel zeigt, Fig. 2 b) das beginnende Anheben der Packtulpe, wobei der Artikel sich zwischen den Laschen zentriert und Fig. 2 c) schließlich das Mitanheben des Artikels bei weiterem Anheben der Packtulpe.
- Fig. 3: die Freigabe eines zuvor kopfseitig ergriffenen Artikels durch die Greiftulpe aus Fig. 1 in einer teilweise geschnittenen Seitenansicht.
- Fig. 4: ein zweites Ausführungsbeispiel einer aufnahmebereiten Greiftulpe vor dem kopfseitigen Absenken auf einen Artikel in teilweise geschnittener Seitenansicht.
- Fig. 5: das Eindringen eines Artikels durch die Aufnahmeöffnung der Greiftulpe aus Fig. 4, wobei der Artikel während des Absenkens der Greiftulpe die Greifzungen selbsttätig um deren Schwenkachsen verschwenkt, in teilweise geschnittener Seitenansicht.
- Fig. 6: die Greiftulpe aus Fig. 4, nachdem der Neckring des Artikels die Greifzungen passiert hat und die Greifzungen schwerkraft- und rückstellkraftbedingt unter dem Neckring in Richtung zu der ihnen jeweils zugeordneten Auflageflächenpartie zurückgeschwenkt sind, in teilweise geschnittener Seitenansicht.
- Fig. 7: die Greiftulpe aus Fig. 4 während des Anhebens eines von ihr kopfseitig ergriffenen Artikels, in teilweise geschnittener Seitenansicht.
- Fig. 8: die Greiftulpe aus Fig. 4 während des Freigebens eines von ihr kopfseitig ergriffenen Artikels, in teilweise geschnittener Seitenansicht.

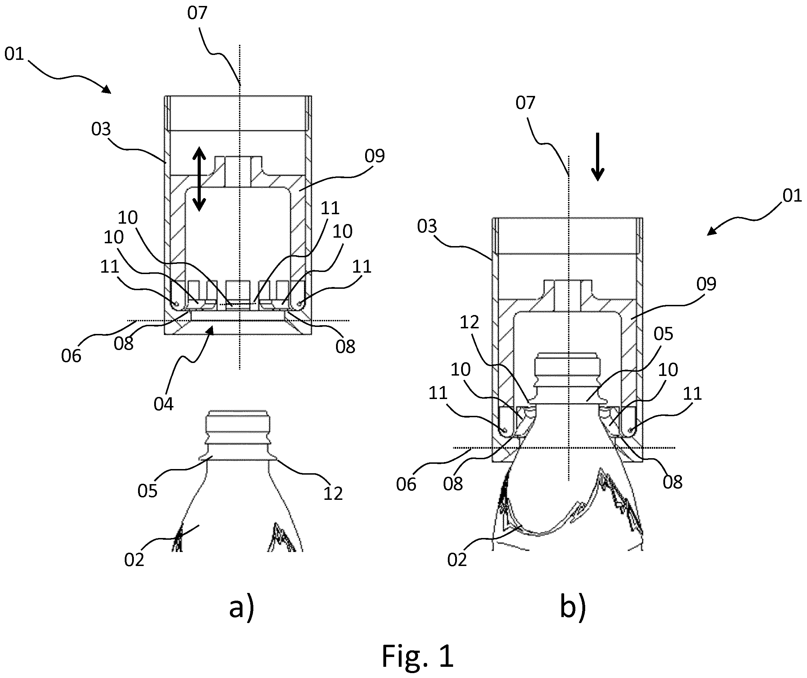

Eine in Fig. 1 bis Fig. 8 ganz oder in Teilen dargestellte Greiftulpe 01 zum kopfseitigen Ergreifen von Artikeln 02 weist einen Grundkörper 03 mit einer Aufnahmeöffnung 04 für zumindest einen als Kontaktabschnitt 05 vorgesehenen oberen Teil der Mantelfläche eines Artikels 02 auf.

Der Grundkörper 03 weist eine normal auf einer von der Aufnahmeöffnung 04 aufgespannten Fläche 06 aufstehende Geometrieachse 07 auf.

Der Grundkörper 03 verfügt außerdem über eine parallel zu der von der Aufnahmeöffnung 04 aufgespannten Fläche 06 verlaufende, zur Geometrieachse 07 hin durch die Aufnahmeöffnung 04 begrenzte Auflagefläche mit zumindest zwei gleichmäßig verteilt um die Geometrieachse verteilt angeordneten Auflageflächenpartien 08.

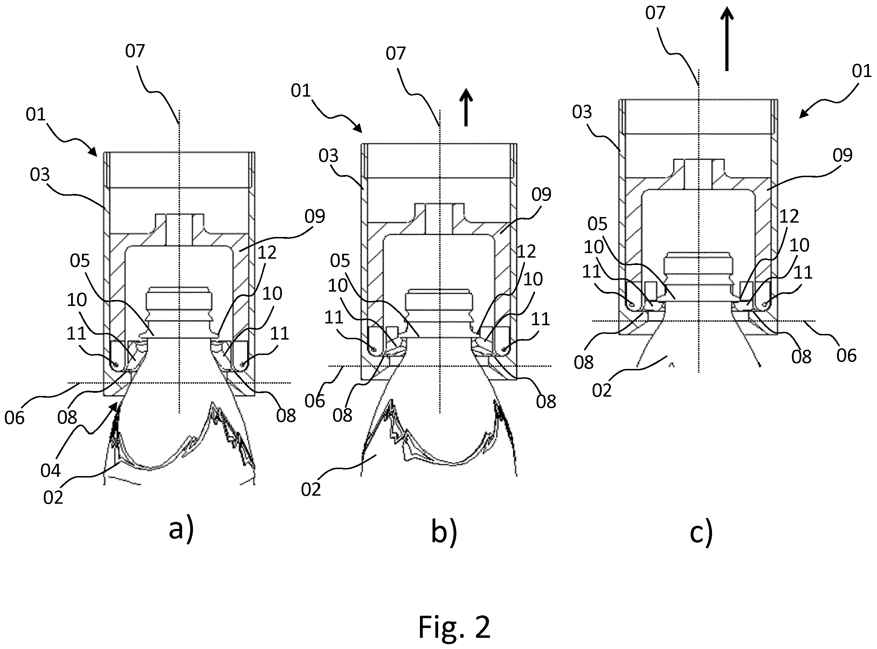

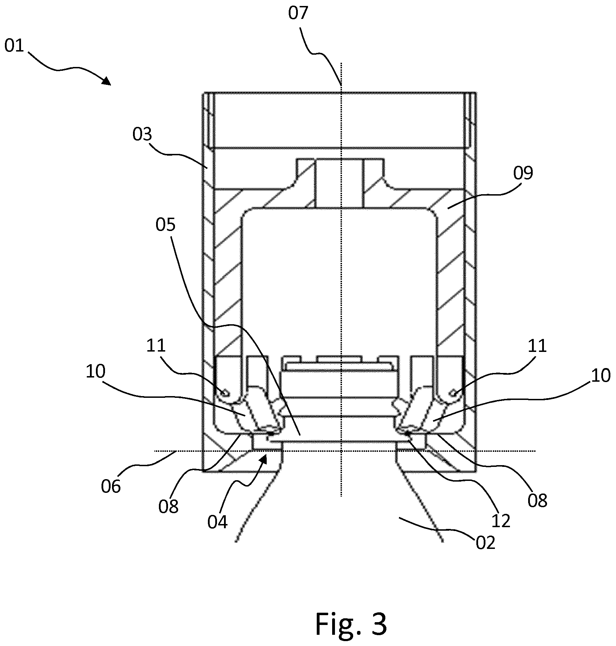

Die Greiftulpe 01 weist außerdem mindestens ein in dem Grundkörper 03 parallel zur Geometrieachse 07 geführtes, zwischen einer in Fig. 1 a), Fig. 1 b), Fig. 2 a), Fig. 2 b), Fig. 2 c) dargestellten Halteposition und einer in Fig. 3 dargestellten Freigabeposition, wie in Fig. 1 a) durch einen Doppelpfeil angedeutet, beweglich angeordnetes Betätigungselement 09 auf.

Ferner weist die Greiftulpe 01 mindestens je eine Greifzunge 10 je Auflageflächenpartie 08 auf. Jede Greifzunge 10 ist an ihrem der Aufnahmeöffnung 04 abgewandten Ende um eine parallel zur von der Aufnahmeöffnung 04 aufgespannten Fläche 06 und zumindest im Sinne der analytischen Geometrie orthogonal zur Geometrieachse 07 verlaufende Schwenkachse 11 gelenkig mit mindestens einem Betätigungselement 09 verbunden. An ihrem der Aufnahmeöffnung 04 abgewandten Ende ist jede Greifzunge 10 gemeinsam mit dem mindestens einen Betätigungselement 09 parallel zur Geometrieachse 07 beweglich. Jede Greifzunge 10 ist mit ihrem verbleibenden, freien Ende der Aufnahmeöffnung 04 zugewandt und lediglich durch die ihr zugeordnete Auflageflächenpartie 08 begrenzt frei um die Schwenkachse 11 beweglich.

In der Halteposition des Betätigungselements 09 ragt zunächst jede Greifzunge 10 um ihre Schwenkachse 11 verschwenkbar, jedoch in einer Schwenkrichtung durch die ihr jeweils zugeordnete Auflageflächenpartie 08 begrenzt, in die Aufnahmeöffnung 04 hinein, wohingegen in der Freigabeposition des Betätigungselements 09 das freie Ende jeder Greifzunge 10 auf die ihr zugeordnete Auflageflächenpartie 08 zurückgezogen ist.

Fig. 1 a) zeigt eine aufnahmebereite Greiftulpe 01, die über einem Artikel 02 steht. Im Anschluss hieran wird die Greiftulpe 01 abgesenkt.

In der Halteposition kann jede Greifzunge 10 bei einem Kontakt mit einem durch die Aufnahmeöffnung 04 in die Greiftulpe 01 eindringenden Artikel 02 durch Verschwenken um die ihr jeweils zugeordnete Schwenkachse 11 zunächst nach oben ausweichen, so dass sie Aufnahmeöffnung 04 in Richtung des Eindringens freigeben wird.

Zum kopfseitigen Ergreifen eines Artikels 02 befindet sich das mindestens eine Betätigungselement 09 in der Halteposition. Die Greiftulpe 01 wird hierzu mit ihrer Aufnahmeöffnung 04 über zumindest einen als Kontaktabschnitt 05 vorgesehenen oberen Teil der Mantelfläche eines Artikels 02 abgesenkt. In der Halteposition des Betätigungselements 09 werden die Greifzungen 10 durch Absenken der Greiftulpe 01 in Richtung parallel zur Geometrieachse 07 beispielsweise über einen Halsabschnitt eines Artikels 02 zumindest gegen deren Schwerkraft um deren Schwenkachsen 11 schräg nach oben verschwenkt und jeweils in eine Winkellage zu deren Auflageflächenpartien 08 gebracht.

Hierdurch kann ein unterhalb der Greiftulpe 01 stehender Artikel 02 in die Greiftulpe 01 eindringen, wobei der Artikel 02 selbst die Aufnahmeöffnung 04 öffnet, indem er die in die Aufnahmeöffnung 04 hineinragenden Greifzungen 10 nach oben hin, weg von den diesen zugeordneten Auflageflächenpartien 08 verschwenkt. Fig. 1 b) zeigt die Situation unmittelbar nach dem Absenken der Greiftulpe 01. Der Artikel 02 ist hierbei bereits kopfseitig in die Greiftulpe 01 eingedrungen.

Nachdem der Artikel 02 unter Verschwenken der Greifzungen 10 durch die Aufnahmeöffnung 04 hindurch in die Greiftulpe 01 eingedrungen ist, stützen sich die Greifzungen 10 entweder mit ihren freien Enden kraftschlüssig gegen den Kontaktabschnitt 05 des Artikels 02 ab, oder sie verschwenken beispielsweise aufgrund deren Schwerkraft zurück in ihre Ausgangsposition, bei der jede Greifzunge 10 auf der ihr zugeordneten Auflageflächenpartie 08 aufliegt, beispielsweise sobald ein im oder als Kontaktabschnitt 05 des Artikels 02 wie in Fig. 1, Fig. 2, Fig. 3 vorzugsweise vorgesehener Neckring 12 die Greifzungen 10 passiert hat, wobei sie die Aufnahmeöffnung 04 für den Neckring 12 in umgekehrter Richtung damit unpassierbar machen und der Artikel 02 die Greiftulpe 01 in dieser Position der Greifzungen 10 nicht mehr verlassen kann.

Zunächst wird die Greiftulpe 01 wie in Fig. 2 a) beispielsweise so weit abgesenkt, bis der Artikel 02 am Rand der Aufnahmeöffnung 04 anschlägt, zumindest jedoch so weit, dass die durch den in die Greiftulpe 01 durch die Aufnahmeöffnung 04 eingedrungenen Artikel 02 nach oben ausgelenkten Greifzungen 10 beim in Fig. 2 b) dargestellten beginnenden Anheben der Greiftulpe 01 nicht mehr kopfseitig des Artikels 02 abrutschen können. Bei als Flaschen mit einem im Kontaktbereich 05 vorgesehenen Neckring 12 ausgeführten Artikeln 02 ist dies regelmäßig dann der Fall, wenn der Neckring 12 die Greifzungen 10 passiert hat und die Greifzungen 10 beispielsweise aufgrund deren Schwerkraft unterhalb des Neckrings 12 wieder nach unten verschwenkt sind, beispielsweise so weit, bis sie wieder auf deren Auflageflächenpartien 08 aufliegen.

Anschließend kann das Verbringen des so kopfseitig ergriffenen Artikels 02 zu einem Bestimmungsort erfolgen, indem der Artikel 02 durch Anheben der Greiftulpe 01 mit angehoben wird. Die Greiftulpe 01 wird anschließend mitsamt dem von ihr kopfseitig ergriffenen Artikel 02 ein-, zwei- oder dreidimensional, oder sogar zur rotatorischen Ausrichtung des Artikels durch Drehung der Greiftulpe 01 um deren Geometrieachse 07 vierdimensional im Raum zum Bestimmungsort bewegt. Das Ende dieser Bewegung sieht vor, dass der Artikel 02 mit seiner Aufstandsfläche wieder auf einem tragfähigen Boden aufsteht, beispielsweise in einer Umverpackung, etwa einem Getränkekasten.

Nunmehr kann der Artikel 02 am Bestimmungsort wieder freigegeben werden.

Zur Freigabe eines Artikels 02 wird das mindestens eine Betätigungselement 09 aus dessen in Fig. 1 a), Fig. 1 b), Fig. 2 a), Fig. 2 b), Fig. 2 c) dargestellter Halteposition in dessen in Fig. 3 dargestellte Freigabeposition verbracht. Hierdurch werden auch die Schwenkachsen 11, um welche jeweils eine der Greifzungen 10 schwenkbar mit dem Betätigungselement 09 gelenkig verbunden sind, mit angehoben, wie dies aus Fig. 3 hervorgeht.

Die um jeweils eine Schwenkachse 11 gelenkig mit mindestens einem Betätigungselement 09 verbundenen Greifzungen 10 werden dabei an ihren der Aufnahmeöffnung 04 abgewandten Enden in Richtung der Bewegung des mindestens einen Betätigungselements 09 aus dessen Halteposition in dessen Freigabeposition mitgenommen, wodurch sich das freie Ende jeder Greifzunge 10 zum durch die ihr zugeordnete Auflageflächenpartie 08 begrenzten Rand der Aufnahmeöffnung 04 zurückzieht. Hierdurch vergrößert sich der Abstand zwischen jeder gelenkigen Verbindung einer Greifzunge 10 mit dem mindestens eine Betätigungselement 09 und dem Ort des in der Halteposition stattgefundenen Kontakts zwischen dem verbleibenden freien Ende einer jeden Greifzunge 10 und dem Kontaktabschnitt 05 des Artikels 02, so dass der Artikel 02 nunmehr weder reib- noch formschlüssig gehalten wird und dadurch freigegeben wird, so dass beispielsweise beim erneuten Anheben der Greiftulpe 01 nach dem Verbringen eines Artikels 02 an dessen Bestimmungsort der zumindest einen oberen Teil der Mantelfläche eines Artikels 02 umfassende Kontaktabschnitt 05 sowie ein daran gegebenenfalls vorgesehener Neckring 12 die Greiftulpe 01 durch die Aufnahmeöffnung 04 in nunmehr umgekehrter Richtung wie beim Absenken wieder verlassen können.

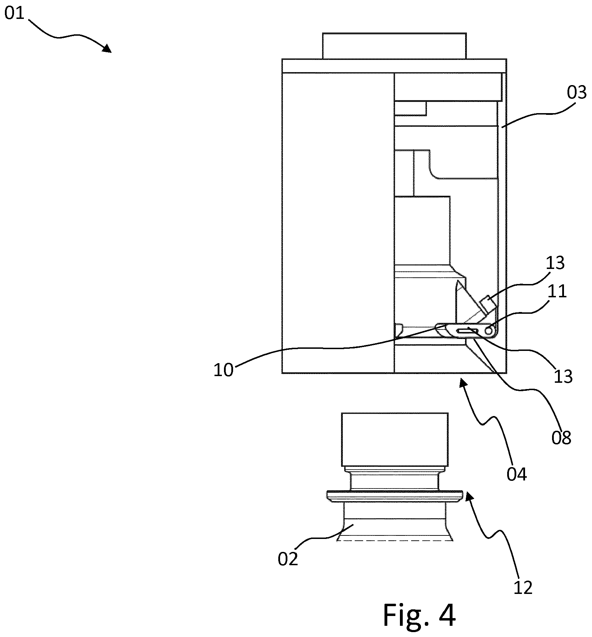

Die Greiftulpe 01 besitzt Greifzungen 10, die am unteren Ende eines beispielsweise tellerförmigen Betätigungselements 09 um jeweils eigene Schwenkachsen 11 beweglich befestigt sind (vgl. hierzu auch die Fig. 4). In und/oder an den Greifzungen 10 und dem Betätigungselement 09 können sich Magnete 13 befinden, die eine eigenständige Rückstellung der Greifzungen 10 beim Aufnehmen eines Artikels 02, etwa eines Flaschenhalses einer Flasche unterstützen können. Durch eine beispielsweise durch einen die Aufnahmeöffnung 04 umgebenden Absatz im Grundkörper 03 der Greiftulpe 01 gebildete, mindestens je eine Auflageflächenpartie 08 je Greifzunge 10 aufweisende Auflagefläche für die Greifzungen 10 wird ein Öffnen verhindert und es wird keine Energie benötigt, um einen einmal aufgenommenen Artikel 02 sicher zu transportieren. Zum Öffnen der Greifzungen 10 wird das mindestens eine vorzugsweise im Inneren des Grundkörpers 03 entlang dessen Geometrieachse 07 zwischen einer Halteposition und einer Freigabeposition hin- und her beweglich geführt angeordnete Betätigungselement 09 vorzugsweise nach oben, weg von der Aufnahmeöffnung 04 betätigt. Durch diese Bewegung kippen die Greifzungen 10 nach unten und der Artikel 02 wird freigegeben.

Die Greifzungen 10 können an ihren freien Enden zumindest an deren der Auflagefläche 08 zugewandten Seiten abgerundet sein. Hierdurch gleiten die freien Enden der Greifzungen 10 besser auf den ihnen zugeordneten Auflageflächenpartien 08 wieder zurück in Richtung der Aufnahmeöffnung 04, wenn das mindestens eine Betätigungselement 09 aus der Freigabeposition wieder zurück in die Halteposition verbracht wird.

Die Freigabeposition befindet sich parallel zur Geometrieachse 07 gesehen bevorzugt weiter entfernt von der Aufnahmeöffnung 04, als die Halteposition. Hierdurch kann eine besonders einfache Geometrie der gelenkigen Verbindung zwischen Greifzunge 10 und Betätigungselement 09 verwirklicht werden.

Beispielsweise kann ein Betätigungselement 09 vorgesehen sein, welches sich parallel zur Geometrieachse 07 erstreckende, via der Schwenkachsen 11 mit je einer Greifzunge 10 verbundene Arme aufweist.

Hierbei können Führungsmittel vorgesehen sein, welche die Schwenkachsen 11 parallel zur Geometrieachse 07 führen. Damit kann das eine Betätigungselement 09 beispielsweise mittels eines Gestänges, eines Kniehebelmechanismus, einer Kolbenstange um nur einige denkbare Ausgestaltungen zu nennen, auf die Position der Schwenkachsen 11 entlang der Geometrieachse 07 einwirken.

Alternativ kann ein Betätigungselement 09 vorgesehen sein, welches teller- oder topfförmig ausgebildet ist. Im Falle einer tellerförmigen Ausgestaltung kann der Teller mit einer zentralen Öffnung versehen sein, die deckungsgleich mit der Aufnahmeöffnung 04 ausgeführt ist und mindestens deren Innendurchmesser aufweist.

Im Falle eines topfförmigen Betätigungselements 09 weist der Boden des Topfs vorzugsweise nach oben, wodurch dieser nicht wie bei der tellerförmigen Ausgestaltung zwingend mit einer zentralen Öffnung ausgestaltet sein muss.

Bei beiden zuvor erwähnten Ausgestaltungen sind die Greifzungen 10 um die Schwenkachsen 11 verschwenkbar gelenkig am Rand des Tellers beziehungsweise des Topfs angeordnet.

Ebenfalls denkbar ist, dass ein Betätigungselement 09 je Greifzunge 10 oder je einer Auflageflächenpartie 08 zugeordneter Greifzungen 10 vorgesehen ist, wobei jedes Betätigungselement 09 in Richtung derjenigen Auflageflächenpartie 08 radial zur Geometrieachse 07 beabstandet parallel zur Geometrieachse 07 zwischen einer Halteposition und einer Freigabeposition beweglich angeordnet geführt ist, welcher Auflageflächenpartie 08 die mindestens eine mit dem entsprechenden Betätigungselement 09 gelenkig verbundene Greifzunge 10 zugeordnet ist.

Auf zumindest einen Teil der Greifzungen 10 kann zumindest in der Halteposition des mindestens einen Betätigungselements 09 eine zusätzliche Rückstellkraft zusätzlich zur Schwerkraft der Greifzungen 10 einwirken, welche ein Verschwenken der jeweiligen Greifzunge 10 um ihre Schwenkachse in Richtung zu der ihr zugeordneten Auflageflächenpartie 08 hin begünstigt.

Die zusätzliche Rückstellkraft kann federelastisch und/oder magnetisch, beispielsweise durch einander abstoßend angeordnete Permanentmagnete 13, aufgebracht sein, wie dies bei der in Fig. 4 bis Fig. 8 dargestellten Ausgestaltung einer Greiftulpe 01 vorgesehen ist.

In Fig. 4 ist die Greiftulpe 01 aufnahmebereit über einem als mit einem Neckring 12 versehene Flasche ausgeführten Artikel 02 positioniert. Die Greifzungen 10 liegen auf den ihnen zugeordneten Auflageflächenpartien 08 auf und ragen hierbei in die Aufnahmeöffnung 04.

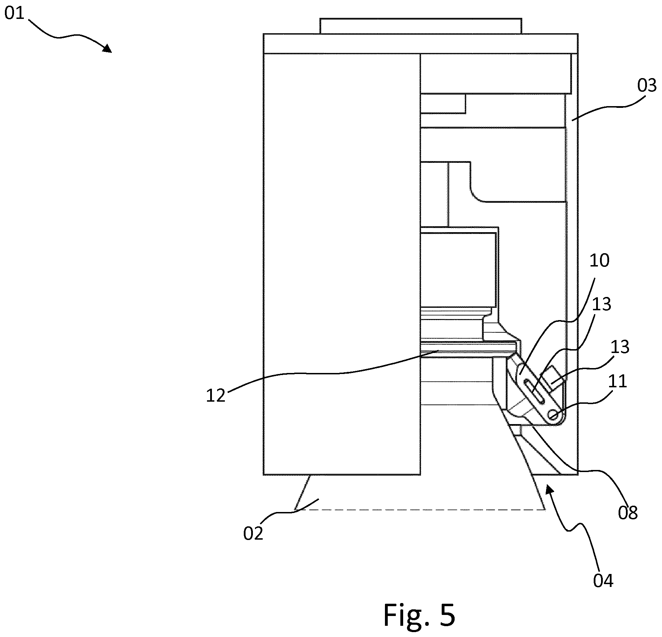

In Fig. 5 ist die Greiftulpe 01 aus der in Fig. 4 dargestellten Position kopfseitig auf die Flasche abgesenkt worden. Die Flasche dringt hierbei durch die Aufnahmeöffnung 04 in die Greiftulpe 01 ein. Die Flasche verschwenkt hierbei selbsttätig die Greifzungen 10 entgegen deren Schwerkraft und entgegen deren durch die einander abstoßend angeordneten Permanentmagneten 13 erzeugte zusätzliche Rückstellkraft um deren Schwenkachsen 11.

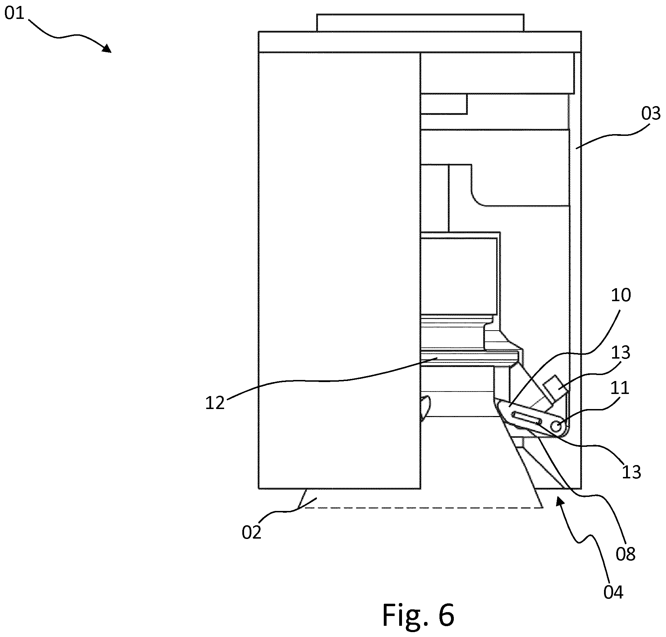

Sobald sich der Neckring 12 oberhalb der Greifzungen 10 befindet, fallen die Greifzungen 10 unterstützt durch die Abstoßkraft der Permanentmagnete 13 unter den Neckring 12, wie in Fig. 6 dargestellt.

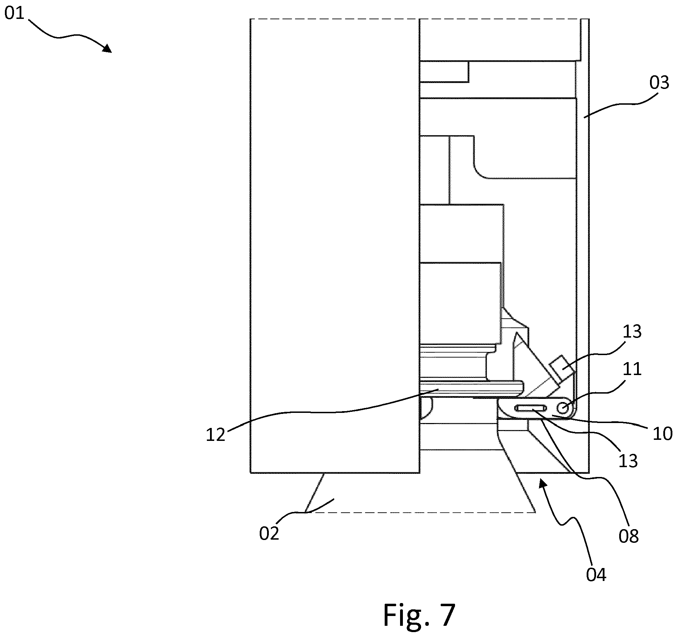

Beim anschließenden Anheben der Greiftulpe 01 wird die Flasche wie in Fig. 7 dargestellt am Neckring 12 gegriffen. Die Greiftulpe 01 ist vollständig geschlossen und die Flasche kann nunmehr zu ihrem Bestimmungsort, in der sie wieder abgegeben wird, verbracht werden. Zum Halten der Flasche ist keine Energie nötig.

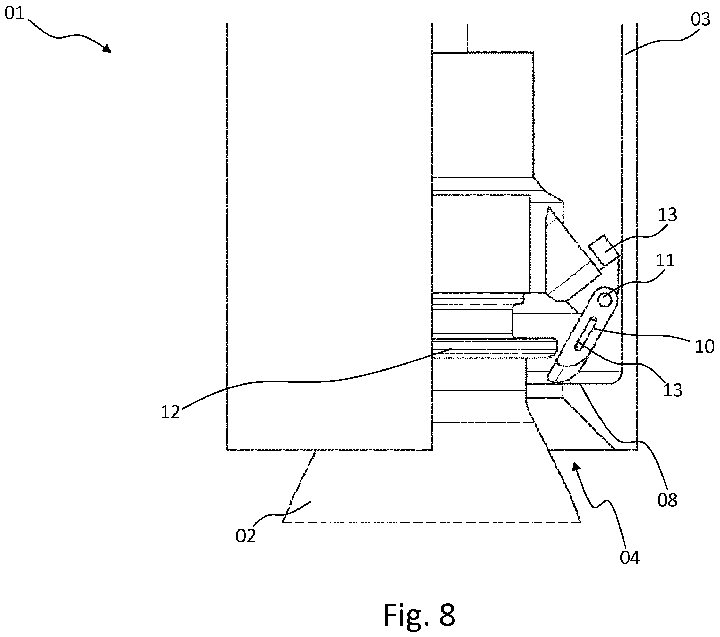

Zum Öffnen der Greiftulpe 01 wird das beispielsweise als ein Teller ausgeführte Betätigungselement 09 im Inneren des Grundkörpers 03 der Greiftulpe 01 nach oben betätigt (vgl. hierzu die Fig. 8). Hierdurch ziehen sich die Greifzungen 10 auf deren Auflageflächenpartien 08 zurück und die Aufnahmeöffnung 04 wird wieder freigegeben, so dass der Neckring 12 nunmehr wieder durch sie hindurchpasst, und die Flasche abgelegt werden kann.

Nachdem die Flasche abgelegt wurde, kann sich das Betätigungselement 09 nebst den via der Schwenkachsen 11 gelenkig mit diesem verbundenen Greifzungen 10 allein anhand der Schwerkraft zurückstellen. Sobald der Rückstellvorgang abgeschlossen ist, kann wieder eine neue Flasche aufgenommen werden.

Wenn insgesamt zwei beidseits der Aufnahmeöffnung 04 einander gegenüberliegende Auflageflächenpartien 08 vorgesehen sind, verlaufen die Schwenkachsen 11, um welche die mindestens zwei einander gegenüber der Aufnahmeöffnung 04 gegenüberliegenden Greifzungen 10 gelenkig mit mindestens einem Betätigungselement 09 verbunden sind, parallel zueinander.

Wenn drei oder mehr gleichmäßig um die Geometrieachse 07 verteilt angeordnete Auflageflächenpartien 08 mit entsprechend mindestens drei gleichmäßig um die Geometrieachse 07 verteilt angeordneten Greifzungen 10 vorgesehen sind, schließen die Schwenkachsen 11, um welche die Greifzungen 10 gelenkig beweglich mit mindestens einem Betätigungselement 09 verbunden sind, ein regelmäßiges Vieleck mit einer der Anzahl der Auflageflächenpartien 08 entsprechenden Zahl von Ecken ein, normal auf dessen Schwerpunkt die Geometrieachse 07 aufsteht.

Die Greiftulpe 01 ist bevorzugt zum kopfseitigen Ergreifen von Artikeln 02 vorgesehen, die jeweils zumindest an einem als Kontaktabschnitt 05 vorgesehenen oberen Teil ihrer Mantelfläche mit einer parallel zu einer als Aufstandsfläche eines Artikels 02 dienenden Grundfläche radial abstehenden, beispielsweise als Neckring 12 ausgestalteten Fläche versehen sind, welche von den Greifzungen 10 der Greiftulpe 01 untergriffen werden kann.

Vorzugsweise ist die Greiftulpe 01 zum kopfseitigen Ergreifen von als PET-Flaschen ausgeführten Artikeln 02 vorgesehen, bei denen eine radial vom Flaschenhals abstehende, als Trag- oder Neckring 12 bezeichnete Fläche angeformt ist.

Wichtig ist hervorzuheben, dass die Greiftulpe 01 Greifzungen 10, beispielsweise in Form von Laschen besitzt, die am unteren Ende eines beispielsweise teller- oder topfförmigen Betätigungselements 09 um jeweils horizontale Schwenkachsen 11 beweglich gelenkig befestigt sind. Dabei müssen mindestens zwei Laschen in geeigneter Breite unterhalb des Neckrings 12 eine Flasche untergreifen, um diese sicher zu nehmen. Die Aufnahme eines Artikels 02 in die Greiftulpe 01 erfolgt energielos, es muss nur die Greiftulpe 01 senkrecht über den Flaschenhals und Neckring 12 gefahren werden. Durch die Auflage der Laschen auf einem eine Auflageflächenpartie 08 bildenden Absatz im Grundkörper 03, wird ein Öffnen verhindert und es wird wiederum keine Energie benötigt, um die Flasche sicher zu halten und zu transportieren. Der beispielsweise zylindrische Grundkörper 03 der Greiftulpe 01 hat an der Unterseite eine Aufnahmeöffnung 04, welche, um die Flasche aufnehmen zu können, entsprechend größer ist als der Neckring 12 der zu greifenden Flasche. Nach der Aufnahme der Flasche klappen die Laschen über den Neckring 12 nach unten und sperren die Flasche in der Greiftulpe 01 ein. Zum Öffnen der Lasche wird innen ein beispielsweise als Teller ausgeführtes Betätigungselement 09, welches mit allen Laschen verbunden ist, nach oben betätigt, durch diese Bewegung kippen die Laschen nach unten und die Flasche wird freigegeben.

Wichtig ist hervorzuheben, dass grundsätzlich das Eindringen eines beispielsweise mit oder ohne einen Neckring 12 in seinem Kontaktabschnitt 05 ausgestatteten Artikels 02 in der Freigabeposition des Betätigungselements 09 erfolgen kann. Das Betätigungselement 09 nimmt in diesem Fall erst nachdem der Artikel 02 durch die Aufnahmeöffnung 04 in die Greiftulpe 01 eingedrungen ist, seine Halteposition ein. Hierdurch können insbesondere bei der Freigabe von reibschlüssig gehaltenen Artikeln 02 ansonsten beim Verbringen des Betätigungselements 09 aus der Halte- in die Freigabeposition gegebenenfalls auftretende Verspannungen zwischen den Greifzungen 10 und dem Kontaktabschnitt 05 des Artikels 02 vermieden werden.

Eine zuvor beschriebene Greiftulpe 01 erlaubt die Durchführung eines Verfahrens zum kopfseitigen Ergreifen von Artikeln 02, welches vorsieht, zunächst die Beweglichkeit von gleichmäßig um eine Geometrieachse 07 verteilt und jeweils an einem abgewandten Ende um innerhalb einer normal zu der Geometrieachse 07 verlaufenden Ebene liegende Schwenkachsen 11 verschwenkbar angeordnete Greifzungen 10 um deren Schwenkachsen 11 nach unterhalb der Ebene zu begrenzen, so dass die jeweils verbleibenden, freien Enden der Greifzungen 10 nur nach oberhalb der Ebene auslenkbar sind.

Die Schwenkachsen 11 spannen hierbei die normal zu der Geometrieachse 07 verlaufende Ebene auf.

Dabei sind die Greifzungen 10 an einem Verschwenken ihrer freien Enden unter die Ebene hinab zunächst gehindert, wobei ein Verschwenken der Greifzungen 10 über die Ebene hinaus jedoch weiterhin ermöglicht ist.

Das Verfahren sieht anschließend vor, die Greiftulpe 01 und mit ihr die Ebene mit den an einem Verschwenken nach unterhalb der Ebene begrenzten Greifzungen 10 entlang der Geometrieachse 07 auf einen Artikel 02 abzusenken.

Das Verfahren sieht vor, während des Absenkens die freien Enden der Greifzungen 10 nach oberhalb der Ebene auszulenken.

Das Verfahren sieht außerdem vor, das Absenken der Greiftulpe 01 mitsamt der Ebene mit den an einem Verschwenken nach unterhalb der Ebene begrenzten Greifzungen 10 entlang der Geometrieachse 07 zu beenden, sobald die nach oberhalb der Ebene ausgelenkten freien Enden der Greifzungen 10 einen als Kontaktabschnitt 05 vorgesehenen oberen Teil der Mantelfläche des Artikels 02 passiert haben, wobei sich die Greifzungen 10 nach der Passage des Kontaktabschnitts 05 zumindest teilweise wieder hin zu ihrer Ausgangslage zu Beginn des Verfahrens zurück verschwenken können und das freie Ende jeder Greifzunge 10 wieder von oberhalb kommend zur Ebene hin zurück verschwenkt wird und sich dadurch der Geometrieachse 07 nähert.

Das Verfahren sieht daraufhin vor den Artikel 02 zu ergreifen, wobei die Greiftulpe 01 und mit ihr die Ebene mit den an einem Verschwenken nach unterhalb der Ebene begrenzten Greifzungen 10 entlang der Geometrieachse 07 angehoben wird, wobei die Greifzungen 10 den Artikel 02 zwischen ihren freien Enden klemmen und/oder die freien Enden der Greifzungen in Richtung zur Geometrieachse 07 hin unter den Kontaktabschnitt 05 ragen.

Das Verfahren sieht ferner vor, den Artikel 02 wieder freizugeben, indem die Begrenzung der Beweglichkeit der Greifzungen 10 nach unterhalb der Ebene aufgehoben wird, wodurch das freie Ende jeder Greifzunge 10 von der Geometrieachse 07 weg zurückgezogen wird.

Die Schwenkachsen verlaufen hierbei jeweils orthogonal zur Geometrieachse, zumindest in dem Sinne, dass bei vektorieller Abbildung oder Beschreibung der Geometrieachse und der Schwenkachsen in einem kartesischen Koordinatensystem das Skalarprodukt eines die Geometrieachse abbildenden Vektors und eines jeden eine Schwenkachse abbildenden Vektors gleich Null ist.

Erfindungsgemäß kann das Auslenken der freien Enden der Greifzungen 10 nach oberhalb der Ebene während des Absenkens durch Kontakt mit dem Artikel 02 erfolgen.

Die Aufhebung der Begrenzung der Beweglichkeit der Greifzungen 10 nach unterhalb der Ebene kann durch Abstandsveränderung einer Auflagefläche der Greiftulpe mit gleichmäßig um eine Geometrieachse verteilt angeordneten Auflageflächenpartien 08 für jeweils eine oder mehrere Greifzungen 10 relativ zu der von den Schwenkachsen 11 aufgespannten Ebene in Richtung parallel zur Geometrieachse 07 erfolgen. Zumindest in einer gedanklichen Betrachtungsweise und/oder schematischen Darstellung des Funktionsprinzips liegen die Auflageflächenpartien 08 während der Begrenzung der Beweglichkeit der Greifzungen 10 nach unterhalb der Ebene innerhalb der Ebene.

Die Auflagefläche kann beispielsweise eine der Anzahl der Greifzungen 10 entsprechende Zahl von Auflageflächenpartien 08 aufweisen.

Vorzugsweise erfolgt die Aufhebung der Begrenzung der Beweglichkeit der Greifzungen 10 nach unterhalb der Ebene durch ein Anheben der Schwenkachsen 11 relativ zu der Auflagefläche in Richtung parallel zur Geometrieachse 07 nach oben, weg von der Auflagefläche und damit weg vom Artikel 02 beziehungsweise weg von einer Aufstandsfläche des Artikels 02.

Alternativ sind durch Betätigung verstellbare Drehwinkelbegrenzer denkbar, welche eine zumindest einseitige, verstellbare Begrenzung des Drehwinkelbereichs, innerhalb dem die Greifzungen 10 um ihre Schwenkachsen 11 frei beweglich sind, aufweisen. Eine entsprechende Drehwinkelbegrenzung einer Greifzunge 10 kann vermittels eines an einer Greifzunge 10 angeordneten, an einer von der Erstreckung der Greifzunge 10 von deren verbleibendem nach deren freiem Ende verschiedenen Seite abstehenden Fortsatz und einen mit diesem zusammenwirkenden, um die Schwenkachse 11 der Greifzunge 10 drehbeweglich verstellbaren Anschlag gebildet sein, gegen den der Fortsatz am Ende des Drehwinkelbereichs anläuft und anschlägt. Die Anschläge der einzelnen Greifzungen 10 bilden hierbei die Auflageflächenpartien 08.

Die Auflageflächenpartien 08 liegen nun - beispielsweise zumindest während dem die Begrenzung der Beweglichkeit der Greifzungen 10 nach unterhalb der Ebene aufgehoben ist - nicht mehr innerhalb einer normal zur Geometrieachse 07 und parallel zur von den Schwenkachsen 11 aufgespannten Ebene verlaufende Fläche 06, sondern spannen - würde eine gemeinsam von den einzelnen Auflageflächenpartien 08 aufgespannte innere Hüllfläche gebildet werden - eine Mantelfläche eines Kegels mit veränderlichem Öffnungswinkel auf, dessen nach unten gerichtete Spitze auf der Geometrieachse 07 liegt.

Denkbar ist eine nach unterhalb der Ebene hin wirksame Begrenzung der Beweglichkeit der Greifzungen 10 außerdem durch ein radiales Einfahren der Auflageflächenpartien 08 zur Geometrieachse 07 hin, bis diese die Greifzungen 10 von unterhalb stützen, jedoch ohne dass diese eine Aufnahmeöffnung 04 für den Kontaktabschnitt 05 behindern, und eine Aufhebung der Begrenzung durch radiales Zurückziehen der Auflageflächenpartien 08 weg von der Geometrieachse 07. Die Radialbewegung der Auflageflächenpartien 08 kann hierbei wie bei einer Irisblende mit einer Zirkumpolarbewegung um die Geometrieachse 07 herum überlagert sein.

Zwischen dem Ergreifen des Artikels 02 und der Freigabe des Artikels 02 kann vorgesehen sein, den Artikel 02 zu verbringen. Beispielsweise kann ein Verbringen des Artikels 02 durch Anheben windschief und/oder schräg und/oder parallel zur Geometrieachse 07 und/oder Bewegung quer und/oder orthogonal zur Geometrieachse 07 und/oder Absenken windschief und/oder schräg und/oder parallel zur Geometrieachse 07 erfolgen.

Das Verfahren kann gleichzeitig auf mehrere Artikel 02 angewandt werden, wobei entsprechend mehrere Greiftulpen 01 gleichzeitig eingesetzt werden.

Zusammengefasst kann das Verfahren vorsehen, dass:
- die gleichmäßig um die Geometrieachse 07 verteilt, um jeweils eine eigene, orthogonal zur Geometrieachse 07 verlaufende Schwenkachse 11 schwenkbar angeordneten Greifzungen 10 zunächst eine Ausgangsposition einnehmen, bei der sie sowohl mit ihren freien Enden, als auch mit ihren verbleibenden Enden innerhalb der Fläche 06 liegen und mit ihren freien Enden zur Geometrieachse 07 hin innerhalb der Fläche 06 in die Aufnahmeöffnung 04 hineinragen, wobei die Schwenkachsen 11 in der Ausgangsposition ebenfalls innerhalb der Fläche 06 liegen,
- dann die ihre Ausgangspositionen einnehmenden Greifzungen 10 gemeinsam von oben über den Kontaktabschnitt 05 des Artikels 02 abgesenkt werden,
- dabei die Greifzungen 10, etwa bei einem Kontakt mit dem Artikel 02, beispielsweise gegen eine Rückstellkraft, aus ihrer Ausgangsposition nach oben aus der Fläche 06 heraus um deren jeweilige Schwenkachse 11 verschenkt werden,
- nach der Passage des Kontaktabschnitts 05 des Artikels 02 die Greifzungen 10 wieder zurück in ihre Ausgangsposition streben, wodurch diese den Artikel 02 am Kontaktabschnitt 05 erfassen und/oder untergreifen und der Artikel 02 angehoben und/oder verbracht werden kann, und
- bei einem anschließenden Anheben der Schwenkachsen 11 der Greifzungen 10 aus der Fläche 06 heraus die freien Enden der Greifzungen 10 innerhalb der Fläche 06 von der Geometrieachse 07 weg zurückgezogen werden, wodurch der Artikel 02 wieder freigegeben wird.

Bei dem Anheben der Schwenkachsen 11 der Greifzungen 10 aus der Fläche 06 heraus, während dem die freien Enden der Greifzungen 10 innerhalb der Fläche 06 von der Geometrieachse 07 weg zurückgezogen werden und der Artikel 02 wieder freigegeben wird, nehmen die Greifzungen 10 eine Freigabeposition ein, in der die Schwenkachsen 11 der Greifzungen 10 eine parallel zu der Fläche 06 verlaufende Ebene aufspannen, die jedoch oberhalb der Fläche 06 liegt.

Der Artikel 02 wird ergriffen, sobald die Greifzungen 10 den Kontaktabschnitt 05 des Artikels 02 bei deren gemeinsamer Absenkbewegung passiert haben und die Greifzungen 10 wieder zurück in ihre Ausgangsposition streben. Bei einem anschließenden Anheben der den Artikel 02 am Kontaktabschnitt 05 erfassenden und/oder untergreifenden, weiterhin in ihrer Beweglichkeit nach unterhalb ihrer Ausgangsposition beschränkten Greifzungen 10 wird der Artikel 02 zwischen den in ihre Ausgangsposition zurückfallenden Greifzungen 10 geklemmt, oder am Kontaktabschnitt, beispielsweise am hierfür vorgesehenen Neckring 12 untergriffen und wird dadurch mit angehoben.

Das Verfahren kann einzelne oder eine Kombination der zuvor in Verbindung mit der Greiftulpe 01 beschriebenen Merkmale aufweisen und/oder verwirklichen, ebenso wie die Greiftulpe 01 einzelne oder eine Kombination mehrerer zuvor in Verbindung mit dem Verfahren beschriebene Merkmale und/oder entsprechende Merkmale verwirklichende Vorrichtungen oder Einrichtungen aufweisen kann.

Sowohl die Greiftulpe 01, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene und/oder in den nachfolgenden Ansprüchen erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung und dem Betrieb von Anlagen und Vorrichtungen der Automatisierungstechnik gewerblich anwendbar, wo mit einer Vielzahl beispielsweise gleichartiger Artikel umgegangen werden muss, beispielsweise in der Automatisierungstechnik für die Lebensmittel- und Getränkeindustrie und/oder in der Verpackungstechnik und in der Verpackungsindustrie.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Greiftulpe
- 02: Artikel
- 03: Grundkörper
- 04: Aufnahmeöffnung
- 05: Kontaktabschnitt
- 06: Fläche
- 07: Geometrieachse
- 08: Auflageflächenpartie
- 09: Betätigungselement
- 10: Greifzunge
- 11: Schwenkachse
- 12: Neckring
- 13: Magnet, Permanentmagnet

## Patentansprüche

1. Greiftulpe (01) zum kopfseitigen Ergreifen von Artikeln (02), mit
- einem Grundkörper (03) mit einer Aufnahmeöffnung (04) für zumindest einen als Kontaktabschnitt (05) vorgesehenen oberen Teil der Mantelfläche eines Artikels (02), einer normal auf einer von der Aufnahmeöffnung (04) aufgespannten Fläche (06) aufstehenden Geometrieachse (07), und einer parallel zu der von der Aufnahmeöffnung (04) aufgespannten Fläche (06) verlaufenden, zur Geometrieachse (07) hin durch die Aufnahmeöffnung (04) begrenzten Auflagefläche mit zumindest zwei gleichmäßig verteilt um die Geometrieachse (07) verteilt angeordneten Auflageflächenpartien (08), **gekennzeichnet durch**
- mindestens ein in dem Grundkörper (03) parallel zur Geometrieachse (07) geführtes, zwischen einer Halteposition und einer Freigabeposition beweglich angeordnetes Betätigungselement (09), und
- mindestens je eine Greifzunge (10) je Auflageflächenpartie (08), welche an ihrem der Aufnahmeöffnung (04) abgewandten Ende um eine parallel zur von der Aufnahmeöffnung (04) aufgespannten Fläche (06) und orthogonal zur Geometrieachse (07) verlaufende Schwenkachse (11) gelenkig mit mindestens einem Betätigungselement (09) verbunden und an ihrem der Aufnahmeöffnung (04) abgewandten Ende gemeinsam mit dem mindestens einen Betätigungselement (09) parallel zur Geometrieachse (07) und mit ihrem verbleibenden, freien Ende der Aufnahmeöffnung (04) zugewandt und lediglich durch die Auflageflächenpartie (08) begrenzt frei um die Schwenkachse (11) beweglich ist,
wobei in der Halteposition des Betätigungselements (09) zunächst jede Greifzunge (10) in einer Schwenkrichtung durch die ihr zugeordnete Auflageflächenpartie (08) begrenzt um ihre Schwenkachse (11) verschwenkbar in die Aufnahmeöffnung (04) hinein ragt, und in der Freigabeposition des Betätigungselements (09) das freie Ende jeder Greifzunge (10) auf die Auflageflächenpartie (08) zurückgezogen ist.

2. Greiftulpe nach Anspruch 1, wobei die Greifzungen (10) an ihren freien Enden zumindest an deren Auflageflächenpartie (08) zugewandten Seiten abgerundet sind.

3. Greiftulpe nach Anspruch 1 oder 2, wobei sich die Freigabeposition parallel zur Geometrieachse (07) gesehen weiter entfernt von der Aufnahmeöffnung (04) befindet, als die Halteposition.

4. Greiftulpe nach Anspruch 1, 2 oder 3, wobei ein Betätigungselement (09) vorgesehen ist, welches sich parallel zur Geometrieachse (07) erstreckende, via der Schwenkachsen (11) mit je einer Greifzunge (10) verbundene Arme aufweist.

5. Greiftulpe nach Anspruch 1, 2 oder 3, wobei ein Betätigungselement (09) je Greifzunge (10) oder je einer Auflageflächenpartie (08) zugeordneter Greifzungen (10) vorgesehen ist, wobei jedes Betätigungselement (09) in Richtung derjenigen Auflageflächenpartie (08) radial zur Geometrieachse (07) beabstandet parallel zur Geometrieachse (07) zwischen einer Halteposition und einer Freigabeposition beweglich angeordnet geführt ist, welcher Auflageflächenpartie (08) die mindestens eine mit dem entsprechenden Betätigungselement (09) gelenkig verbundene Greifzunge (10) zugeordnet ist.

6. Greiftulpe nach einem der voranstehenden Ansprüche, wobei auf zumindest einen Teil der Greifzungen (10) zumindest in der Halteposition des mindestens einen Betätigungselements (09) eine Rückstellkraft einwirkt, welche ein Verschwenken der jeweiligen Greifzunge (10) um ihre Schwenkachse (11) in Richtung zu der ihr zugeordneten Auflageflächenpartie (08) hin ersucht oder begünstigt.

7. Greiftulpe nach Anspruch 6, wobei die Rückstellkraft federelastisch und/oder magnetisch (13) aufgebracht ist.

8. Greiftulpe nach einem der voranstehenden Ansprüche, wobei wenn insgesamt zwei beidseits der Aufnahmeöffnung (04) einander gegenüberliegende Auflageflächenpartien (08) vorgesehen sind, die Schwenkachsen (11) parallel zueinander verlaufen.

9. Greiftulpe nach einem der Ansprüche 1 bis 7, wobei bei drei oder mehr gleichmäßig um die Geometrieachse (07) angeordneten Auflageflächenpartien (08) die Schwenkachsen (11) ein regelmäßiges Vieleck mit einer der Anzahl der Auflageflächenpartien (08) entsprechenden Zahl von Ecken einschließen.

10. Greiftulpe nach einem der voranstehenden Ansprüche, wobei sie zum kopfseitigen Ergreifen von Artikeln (02) vorgesehen ist, die jeweils mit einer parallel zu einer als Aufstandsfläche eines Artikels (02) dienenden Grundfläche radial abstehenden Fläche (12) versehen sind, welche von den Greifzungen (10) der Greiftulpe (01) untergriffen werden kann.

11. Verfahren zum kopfseitigen Ergreifen von Artikeln, welches vorsieht:
- zunächst die Beweglichkeit von gleichmäßig um eine Geometrieachse (07) verteilt und jeweils an einem abgewandten Ende um eine normal zu der Geometrieachse (07) verlaufende Ebene aufspannende Schwenkachsen (11) verschwenkbar angeordnete Greifzungen (10) um deren Schwenkachsen (11) nach unterhalb der Ebene zu begrenzen, so dass die jeweils verbleibenden, freien Enden der Greifzungen (10) zunächst ausschließlich nach oberhalb der Ebene auslenkbar sind,
- anschließend die innerhalb der Ebene liegenden Greifzungen (10) entlang der Geometrieachse (07) auf einen Artikel (02) abzusenken,
- während des Absenkens die freien Enden der Greifzungen (10) nach oberhalb der Ebene auszulenken,
- das Absenken zu beenden, sobald die nach oberhalb der Ebene ausgelenkten freien Enden der Greifzungen (10) einen Kontaktabschnitt (05) des Artikels (02) passiert haben und das freie Ende jeder Greifzunge (10) wieder zumindest teilweise zurück verschwenkt und dadurch zu der Geometrieachse (07) hin vorgeschoben worden ist, **dadurch gekennzeichnet, dass**
- unter Beibehaltung der Begrenzung der Beweglichkeit der Greifzungen (10) die Schwenkachsen (11) angehoben werden, wobei die Greifzungen (10) den Artikel (02) zwischen ihren freien Enden klemmen und/oder die freien Enden der Greifzungen in Richtung zur Geometrieachse hin den Kontaktabschnitt (05) untergreifen, und dass
- zur Freigabe des Artikels (02) die Begrenzung der Beweglichkeit der Greifzungen (10) nach unterhalb der Ebene aufgehoben wird, wodurch das freie Ende jeder Greifzunge (10) von der Geometrieachse (07) weg zurückgezogen wird.

12. Verfahren nach Anspruch 11, wobei das Auslenken der freien Enden der Greifzungen (10) nach oberhalb der Ebene während des Absenkens durch Kontakt mit dem Artikel (02) erfolgt.

13. Verfahren nach Anspruch 11 oder 12, wobei die Aufhebung der Begrenzung der Beweglichkeit der Greifzungen (10) nach unterhalb der Ebene durch Abstandsveränderung einer Auflagefläche mit gleichmäßig um die Geometrieachse (07) verteilt angeordneten Auflageflächenpartien (08) für jeweils eine oder mehrere Greifzungen (10) relativ zu der Ebene in Richtung parallel zur Geometrieachse (07) erfolgt, wobei die Auflageflächenpartien (08) während der Begrenzung der Beweglichkeit der Greifzungen (10) nach unterhalb der Ebene innerhalb der Ebene liegen.

14. Verfahren nach Anspruch 12, wobei die Aufhebung der Begrenzung der Beweglichkeit der Greifzungen (10) nach unterhalb der Ebene durch ein Anheben der Schwenkachsen (11) in Richtung parallel zur Geometrieachse (07) nach oben erfolgt.

15. Verfahren nach einem der Ansprüche 11 bis 14, wobei der Artikel (02) zwischen dem Ergreifen und der Freigabe verbracht wird.

## Claims

1. A gripping bell (01) for grasping the top of articles (02), comprising
- a base body (03) with a receiving opening (04) for at least an upper part, provided as a contact section (05), of the outer surface of an article (02), a geometrical axis (07) perpendicular to a surface (06) spanned by the receiving opening (04), and a bearing surface which extends parallel to the surface (06) which is spanned by the receiving opening (04) and is bounded towards the geometrical axis (07) by the receiving opening (04) and has at least two bearing surface portions (08) arranged distributed uniformly around the geometrical axis (07), **characterized in that**
- at least one actuating element (09) guided in the base body (03) parallel to the geometrical axis (07) and arranged movably between a holding position and a release position, and
- at least one gripping tongue (10) each per bearing surface portion (08), which gripping tongue (10) at its end remote from the receiving opening (04) is articulatedly connected to at least one actuating element (09) about a pivot axis (11) running parallel to the surface (06) spanned by the receiving opening (04) and extending orthogonally to the geometrical axis (07) and at its end remote from the receiving opening (04) together with the at least one actuating element (09) is parallel to the geometrical axis (07) and with its remaining free end faces the receiving opening (04) and is freely movable around the pivot axis (11), limited only by the bearing surface portion (08),
wherein, in the holding position of the actuating element (09), each gripping tongue (10) firstly projects into the receiving opening (04) in a pivoting direction so as to be pivotable about its pivot axis (11) by the bearing surface portion (08) associated therewith, and, in the release position of the actuating element (09), the free end of each gripping tongue (10) is retracted onto the bearing surface portion (08).

2. The gripping bell as recited in claim 1, wherein the gripping tongues (10) are rounded at their free ends at least on the sides facing their bearing surface portion (08).

3. The gripping bell as recited in claim 1 or 2, wherein the release position, seen parallel to the geometrical axis (07), is further away from the receiving opening (04) than the holding position.

4. The gripping bell as recited in claim 1, 2 or 3, wherein an actuating element (09) is provided which has arms extending parallel to the geometrical axis (07) and connected via the pivot axes (11) to one gripping tongue (10) in each case.

5. The gripping bell as recited in claim 1, 2 or 3, wherein an actuating element (09) is provided for each gripping tongue (10) or for gripping tongues (10) each assigned to a bearing surface portion (08), wherein each actuating element (09) is movably guided in the direction of that bearing surface portion (08) radially to the geometrical axis (07) at a spacing parallel to the geometrical axis (07) between a holding position and a release position, to which bearing surface portion (08) the at least one gripping tongue (10) hingedly connected to the corresponding actuating element (09) is assigned.

6. The gripping bell as recited in one of the preceding claims, wherein a restoring force acts on at least some of the gripping tongues (10) at least in the holding position of the at least one actuating element (09), which restoring force requests or favours pivoting of the respective gripping tongue (10) about its pivot axis (11) in the direction towards the bearing surface portion (08) assigned to it.

7. The gripping bell as recited in claim 6, wherein the restoring force is applied resiliently and/or magnetically (13).

8. The gripping bell as recited in one of the preceding claims, wherein if a total of two bearing surface portions (08) located opposite one another on both sides of the receiving opening (04) are provided, the pivot axes (11) run parallel to one another.

9. The gripping bell as recited in one of the claims 1 to 7, wherein in three or more bearing surface portions (08) uniformly arranged around the geometrical axis (07), the pivot axes (11) include a regular polygon with a number of corners corresponding to the number of bearing surface portions (08).

10. The gripping bell as recited in one of the preceding claims, wherein it is provided for grasping the top of articles (02), which are each equipped with a radially projecting surface (12) parallel to a base surface serving as a contact surface of an article (02), which radially projecting surface (12) can be gripped underneath by the gripping tongues (10) of the gripping bell (01).

11. A method for grasping the top of articles (02), which method provides:
- at first to limit the mobility of gripping tongues (10), which are arranged evenly distributed around a geometrical axis (07) and are pivotable, in each case at a remote end, about pivot axes (11) spanning a plane extending perpendicularly to the geometrical axis (07), about their pivot axes (11) below the plane so that the respective remaining free ends of the gripping tongues (10) can initially be deflected exclusively above the plane,
- then to lower the gripping tongues (10) located within the plane along the geometrical axis (07) onto an article (02),
- during lowering, to deflect the free ends of the gripping tongues (10) above the plane,
- to stop the lowering as soon as the free ends of the gripping tongues (10) deflected above the plane have passed a contact section (05) of the article (02) and the free end of each gripping tongue (10) has been pivoted back again at least partially and thereby advanced towards the geometrical axis (07), **characterized in that**
- the pivot axes (11) are raised while maintaining the limitation of the mobility of the gripping tongues (10), wherein the gripping tongues (10) clamp the article (02) between their free ends and/or the free ends of the gripping tongues engage under the contact section (05) in the direction towards the geometrical axis, and that
- for releasing the article (02), the limitation of the mobility of the gripping tongues (10) below the plane is cancelled, whereby the free end of each gripping tongue (10) is retracted away from the geometrical axis (07).

12. The method as recited in claim 11, wherein the deflection of the free ends of the gripping tongues (10) above the plane takes place during lowering by contact with the article (02).

13. The method as recited in claim 11 or 12, wherein the removal of the limitation of the mobility of the gripping tongues (10) to below the plane is effected by changing the distance of a bearing surface with bearing surface portions (08) for one or more gripping tongues (10) each arranged distributed uniformly about the geometrical axis (07) relative to the plane in the direction parallel to the geometrical axis (07), wherein the bearing surface portions (08) lie within the plane during the limitation of the mobility of the gripping tongues (10) to below the plane.

14. The method as recited in claim 12, wherein the removal of the limitation of the mobility of the gripping tongues (10) to below the plane is effected by a lifting of the pivot axes (11) upwards in the direction parallel to the geometrical axis (07).

15. The method as recited in one of the claims 11 to 14, wherein the article (02) is moved between seizure and release.

## Revendications

1. Tulipe de préhension (01) destinée à saisir des articles (02) par la tête, comprenant
- un corps de base (03) ayant une ouverture de réception (04) pour au moins une partie supérieure, prévue comme portion de contact (05), de la surface latérale d'un article (02), un axe de géométrie (07) perpendiculaire à une surface (06) définie par l'ouverture de réception (04), et une surface d'appui qui s'étend parallèlement à ladite surface (06) définie par l'ouverture de réception (04) et est délimitée par l'ouverture de réception (04) vers l'axe de géométrie (07) et qui comprend au moins deux parties de surface d'appui (08) réparties uniformément autour de l'axe de géométrie (07), **caractérisée par**
- au moins un élément de manoeuvre (09) qui est guidé dans ledit corps de base (03) parallèlement à l'axe de géométrie (07) et est disposé de manière à être déplaçable entre une position de retenue et une position de libération, et
- au moins respectivement une languette de préhension (10) par partie de surface d'appui (08), qui, à son extrémité montrant dans la direction opposée à l'ouverture de réception (04), est reliée de façon articulée à au moins un élément de manoeuvre (09) autour d'un axe de pivotement (11) s'étendant parallèlement à la surface (06) définie par l'ouverture de réception (04) et orthogonalement à l'axe de géométrie (07), et qui, à son extrémité montrant dans la direction opposée à l'ouverture de réception (04), est déplaçable conjointement avec ledit au moins un élément de manoeuvre (09) parallèlement à l'axe de géométrie (07) et montre vers l'ouverture de réception (04) avec son extrémité libre restante et est librement déplaçable autour de l'axe de pivotement (11) en étant délimitée uniquement par la partie de surface d'appui (08),
dans laquelle, dans la position de retenue de l'élément de manoeuvre (09), d'abord chaque languette de préhension (10) se projette dans l'ouverture de réception (04) en pouvant pivoter autour de son axe de pivotement (11) dans une direction de pivotement, délimitée par la partie de surface d'appui (08) qui lui est associée, et, dans la position de libération de l'élément de manoeuvre (09), l'extrémité libre de chaque languette de préhension (10) est retirée sur la partie de surface d'appui (08).

2. Tulipe de préhension selon la revendication 1, dans laquelle les languettes de préhension (10) sont arrondies à leurs extrémités libres, au moins sur les côtés qui montrent vers la partie de surface d'appui (08).

3. Tulipe de préhension selon la revendication 1 ou 2, dans laquelle la position de libération, vue parallèlement à l'axe de géométrie (07), est plus éloignée de l'ouverture de réception (04) que la position de retenue.

4. Tulipe de préhension selon la revendication 1, 2 ou 3, dans laquelle un élément de manoeuvre (09) est prévu qui présente des bras s'étendant parallèlement à l'axe de géométrie (07) et reliés à respectivement une languette de préhension (10) via les axes de pivotement (11).

5. Tulipe de préhension selon la revendication 1, 2 ou 3, dans laquelle un élément de manoeuvre (09) est prévu par languette de préhension (10) ou par languettes de préhension (10) associées à respectivement une partie de surface d'appui (08), dans laquelle chaque élément de manoeuvre (09) est guidé en direction de ladite partie de surface d'appui (08), à distance radiale par rapport à l'axe de géométrie (07), en étant disposé de manière déplaçable parallèlement à l'axe de géométrie (07) entre une position de retenue et une position de libération, à laquelle partie de surface d'appui (08) est associée ladite au moins une languette de préhension (10) reliée de façon articulée à l'élément de manoeuvre (09) correspondant.

6. Tulipe de préhension selon l'une quelconque des revendications précédentes, dans laquelle une force de rappel agit sur au moins une partie des languettes de préhension (10), au moins dans la position de retenue dudit au moins un élément de manoeuvre (09), force de rappel qui tend à faire pivoter ou favorise un pivotement de la languette de préhension (10) respective autour de son axe de pivotement (11) vers la partie de surface d'appui (08) associée à elle.

7. Tulipe de préhension selon la revendication 6, dans laquelle ladite force de rappel est appliquée par élasticité de ressort et/ou de façon magnétique (13).

8. Tulipe de préhension selon l'une quelconque des revendications précédentes, dans laquelle, lorsque deux parties de surface d'appui (08) opposées de part et d'autre de l'ouverture de réception (04) sont prévues dans l'ensemble, les axes de pivotement (11) s'étendent parallèlement entre eux.

9. Tulipe de préhension selon l'une quelconque des revendications 1 à 7, dans laquelle, lorsqu'il y a trois ou plusieurs parties de surface d'appui (08) disposées uniformément autour de l'axe de géométrie (07), les axes de pivotement (11) délimitent un polygone régulier ayant un nombre d'angles correspondant au nombre des parties de surface d'appui (08).

10. Tulipe de préhension selon l'une quelconque des revendications précédentes, dans laquelle elle est prévue pour saisir par la tête des articles (02) qui sont pourvus chacun d'une surface (12) laquelle est en saillie radiale parallèlement à une surface de base faisant office de surface d'appui d'un article (02) et sous laquelle les languettes de préhension (10) de la tulipe de préhension (01) peuvent venir en prise.

11. Procédé destiné à saisir des articles (02) par la tête, qui prévoit:
- de limiter d'abord la mobilité de languettes de préhension (10) qui sont réparties uniformément autour d'axe de géométrie (07) et qui peuvent pivoter chacune, à une extrémité opposée, autour d'axes de pivotement (11) définissant un plan s'étendant perpendiculairement à l'axe de géométrie (07), autour de leurs axes de pivotement (11) vers le dessous dudit plan de sorte que les extrémités libres respectivement restantes des languettes de préhension (10) peuvent être déviées d'abord exclusivement vers le dessus dudit plan,
- ensuite, de faire descendre les languettes de préhension (10) situées à l'intérieur dudit plan, suivant l'axe de géométrie (07) sur un article (02),
- de dévier les extrémités libres des languettes de préhension (10) vers le dessus du plan pendant que l'on fait descendre celles-ci,
- de terminer le mouvement descendant dès que les extrémités libres des languettes de préhension (10), déviées vers le dessus du plan, ont passé une portion de contact (05) de l'article (02) et que l'extrémité libre de chaque languette de préhension (10) s'est redéplacée par pivotement au moins en partie et a été avancée ainsi vers l'axe de géométrie (07), **caractérisé par le fait que**
- les axes de pivotement (11) sont soulevés tout en maintenant la limitation de la mobilité des languettes de préhension (10), les languettes de préhension (10) serrant l'article (02) entre leurs extrémités libres et/ou les extrémités libres des languettes de préhension venant en prise au-dessous de la portion de contact (05) en direction de l'axe de géométrie, et que,
- pour libérer l'article (02), la limitation de la mobilité des languettes de préhension (10) vers le dessous du plan est supprimée, l'extrémité libre de chaque languettes de préhension (10) étant ainsi retirée dans la direction opposée à l'axe de géométrie (07).

12. Procédé selon la revendication 11, dans lequel la déviation des extrémités libres des languettes de préhension (10) vers le dessus du plan pendant que l'on fait descendre celles-ci est réalisée par contact avec l'article (02).

13. Procédé selon la revendication 11 ou 12, dans lequel la suppression de la limitation de la mobilité des languettes de préhension (10) vers le dessous du plan est réalisée en modifiant la distance d'une surface d'appui ayant des parties de surface d'appui (08) réparties uniformément autour de l'axe de géométrie (07) pour respectivement une ou plusieurs languette(s) de préhension (10), par rapport au plan dans la direction parallèle à l'axe de géométrie (07), dans lequel, pendant la limitation de la mobilité des languettes de préhension (10) vers le dessous du plan, les parties de surface d'appui (08) sont situées à l'intérieur du plan.

14. Procédé selon la revendication 12, dans lequel la suppression de la limitation de la mobilité des languettes de préhension (10) vers le dessous du plan est réalisée en faisant monter les axes de pivotement (11) dans la direction parallèle à l'axe de géométrie (07).

15. Procédé selon l'une quelconque des revendications 11 à 14, dans lequel l'article (02) est transporté entre la saisie et la libération.
